# EUROPEAN PATENT APPLICATION

(11) **EP 2 579 227 A1**
(43) Date of publication of application: **10.04.2013**
(21) Application number: 12782524.8
(22) Date of filing: 17.01.2012
(51) Int. Cl.: G08C 19/00, G08C 17/02, H04L 29/08

(54) **DATA ACQUISITION CONCENTRATOR AND DATA ACQUISITION METHOD**

(30) Priority: 09.05.2011 CN 201110118611
(71) Applicant: Guangzhou Sunrise Electronics Development Co., Ltd, Guangzhou, Guangdong 510300 (CN)
(72) Inventor: DAI, Zhe, Guangzhou, Guangdong 510300 (CN); GE, Wu, Guangzhou, Guangdong 510300 (CN)
(74) Representative: Epping - Hermann - Fischer
(86) International application number: PCT/CN2012/070462
(87) International publication number: WO 2012/152082

(57) **Abstract**

A data acquisition concentrator and a data acquisition method are provided. The data acquisition concentrator comprises a data acquisition module (101) for acquiring data recorded by an instrument, a data processing module (102) for processing and encapsulating the data acquired by the data acquisition module (101), and a reporting module (103) for transmitting the data encapsulated by the data processing module (102) to a system server through a universal network. The data acquisition concentrator and the data acquisition method can be applied to meter reading on various occasions such as electric power, water, gas and the like without laying a special circuit.

## Description

### CROSS REFERENCE TO RELATED APPLICATION

This application claims the priority to Chinese patent application No. 201110118611.2 entitled "DATA COLLECTING CONCENTRATOR AND DATA COLLECTING METHOD", filed on May 9, 2011 with the State Intellectual Property Office of PRC, which is incorporated herein by reference in its entirety.

### FIELD OF THE INVENTION

The present invention relates to the technical field of information collecting, and more specifically to a data collecting concentrator and a data collecting method.

### BACKGROUND OF THE INVENTION

At present, with the continuous improvement of the national economy, the electric power industry has acquired unprecedented development, and the demand for electric power resources is increasing rapidly. With the rapid development of electric power business, the demand for information technology by each department is also increasing. The addition of high-tech information technology provides a powerful foundation and guarantee for the development of the electric power industry, it penetrates into each department and each link of an electric power system including production department, management department, planning department or the like, to provide highly efficient management services for the normal operation of an electric power enterprise.

Electric power facilities used in the electric power system have an obvious feature in management, that is, the electric power facilities are distributed in a specific geographical range dispersedly (e.g., in a city or an area), and this feature brings a lot of difficulties for equipment management in the electric power system. An electric power department is facing the works on how to settle purchasing and selling of electricity quantity, and system network losses accurately and timely and so on. In order to provide powerful data basis for operational decision better, it is necessary to employ computer technology to realize informatization and automation of data of the electric power department.

In the electric power system, current meter reading management modes mainly includes a mode of wired 485 bus meter reading mode and an electric power line carrier communication meter reading mode.

The meter reading system of the 485 bus mode mainly includes an electric energy meter, a collector, a concentrator, a data channel machine, and a master computer. Wherein the collector is responsible for performing centralized processing and calculating on the electricity utilization data of several electricity meters, and transmitting the data upward after packaging it. Several collectors are connected to the concentrator through a twisted pair to form a 485 network. The concentrator is responsible for communicating with the master computer and the collector, and the communication between the concentrator and the master computer may be selected from multiple ways such as a telephone line, a radio, a special line cable and so on.

The meter reading system of the 485 bus mode has the following disadvantages:

1. a special 485 line is needed to be laid, the workloads for construction wiring and maintenance is heavy and the cost is high;

2. a net wire is vulnerable to man-made destruction; and

3. it is not easy to find a fault point when the line is damaged.

The working principles of the electric power line carrier communication meter reading mode are as follows: the electric power line carrier communication refers to a technique in which information is modulated into high frequency signals, then the high frequency signals are stacked and transmitted on a electric power line, and the information is received through demodulation, by using a modulation and demodulation technique. There have been decades of development history about this study. With the continuous increase of demand for an automatic meter reading system and the rapid development of Internet technology, more and more attention is paid to the value of using 220V low voltage electric power line to transmit high speed data, which has remarkable feature of not requiring wiring, covering a wide range and implementing connection conveniently. However, in the electric power carrier communication, because a low voltage electric power line is different from a normal data communication line, a carrier signal on low voltage electric power line not only subjects to attenuation, but also subjects to a serious noise interference problem, therefore, the reliability of the data can't be guaranteed.

### SUMMARY OF THE INVENTION

Aiming at the above problems in the prior art, a data collecting concentrator and data collecting method is provided according to an embodiment of the invention, in which the collecting data from different instruments can be achieved without laying a special line, and the reliability of data transmission is guaranteed.

Accordingly, an embodiment of the invention provides a following technical solution:

a data collecting concentrator including:

a data collecting module for collecting data recorded by an instrument;

a data processing module for processing and encapsulating the data collected by the data collecting module; and

a reporting module for transmitting the data encapsulated by the data processing module to a system server through a universal network.

Optionally, the data collecting module includes an RS232 interface and/or an RS485 interface.

Optionally, the data collecting module includes a radio-frequency (RF) module for collecting data recorded by an instrument through a radio-frequency mode.

Optionally, the reporting module is adapted to transmit the data encapsulated by the data processing module to the system server through an Ethernet interface or a wireless module.

Preferably, the data collecting concentrator further includes:

a storage module for storing the data collected by the data collecting module.

A data collecting method including:

collecting data recorded by an instrument;

processing and encapsulating the collected data; and

transmitting the encapsulated data to a system server through a universal network.

Optionally, the collecting data recorded by an instrument includes:

collecting data recorded by an instrument through a RS232 interface and/or a RS485 interface.

Optionally, the collecting data recorded by an instrument further includes: collecting data recorded by an instrument via a way of radio-frequency.

Optionally, the transmitting the encapsulated data to a system server includes:

transmitting the encapsulated data to a system server through an Ethernet interface or a wireless module.

Preferably, the method further includes storing the collected data.

The data collecting concentrator and data collecting method according to an embodiment of the invention may support various kinds of instrument data collection through the wired and/or wireless modes, which are independent of each other and are non-interfering in the processing, furthermore, the data are transmitted to the system server through the universal network. With the data collecting concentrator according to an embodiment of the invention, it is not necessary to lay a special line, moreover, simple construction, low-cost installation, strong anti-interference ability, and high reliability of data collection and transmission can be obtained. The data collecting concentrator and the data collecting method also have good flexibility of networking, a wide range of applications, and can be applied to perform meter reading not only in electric power but also in various occasions such as water, gas and the like.

### BRIEF DESCRIPTION OF THE DRAWINGS

Fig.1 is a structural schematic diagram of a data collecting concentrator according to an embodiment of the present invention;

Fig.2 is a structural schematic diagram of a specific application of the data collecting concentrator according to an embodiment of the present invention; and

Fig.3 is a flowchart of a data collecting method according to an embodiment of the present invention.

### DETAILED DESCRIPTION OF THE INVENTION

In order to make the solution of an embodiment of the present invention to be better understood by those skilled in the art, the embodiment of the present invention will be described in further detail in conjunction with the accompanying drawings and implementations below.

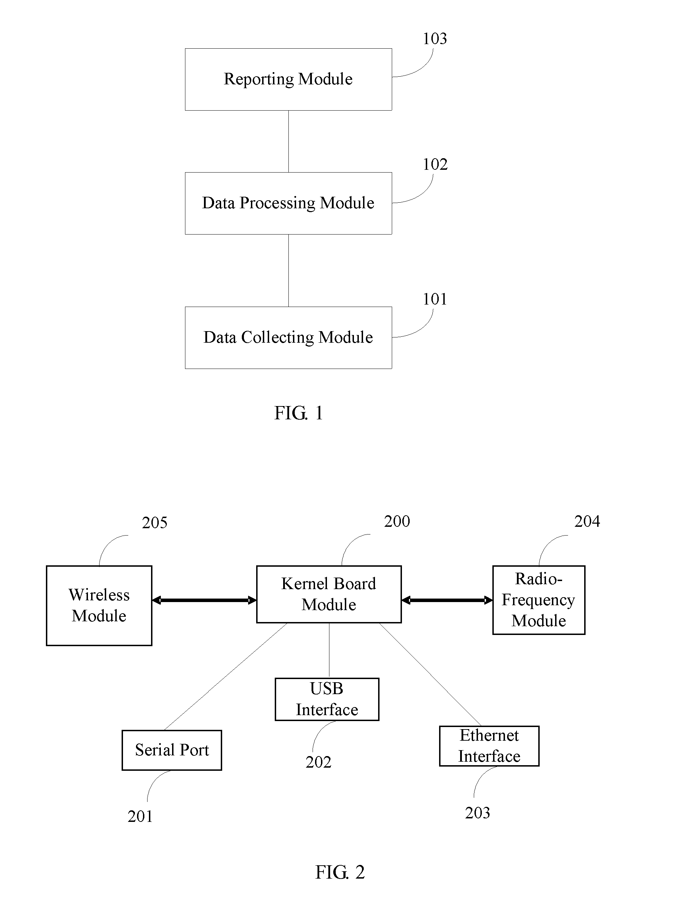

A structural schematic diagram of a data collecting concentrator according to an embodiment of the present invention is shown in the Fig. 1.

In this embodiment, the data collecting concentrator includes:

A data collecting module 101, for collecting data recorded by an instrument;

A data processing module 102, for processing and encapsulating the data collected by the data collecting module 101;

A reporting module 103, for transmitting the data encapsulated by the data processing module 102 to a system server through a universal network.

In the embodiment of the present invention, the data collecting module 101 may collect the data from a variety of different types of instruments such as an electricity meter, a gas meter, a water meter and so on. The data collecting module 101 includes one or more of the followings: a RS232 interface, and/or a RS485 interface, and/or a radio-frequency module. Therefore, the data recorded by an instrument may be collected through various serial port wired mode and radio-frequency wireless mode simultaneously as required.

In the embodiment of the present invention, the reporting module 103 may specifically transmit the data encapsulated by the data processing module 102 to the system server through an Ethernet interface or a wireless module.

Therefore, the data processing module 102 is required to process and encapsulate the data collected by the data collecting module 101 differently, for different data transmission modes.

For example, the data processing module 102 performs frame filtering and parsing on the data collected by the data collecting module 101. Because a actually sent data packet needs to be encapsulated into a data frame in a special format which contains a physical address of a recipient, all nodes may receive the data frame and check the header of the frame, but this frame is only accepted by the recipient of this frame, and is discarded by other recipients without being processed, this is the frame filtering mentioned above. The data processing module 102 checks the MAC (Media Access Control) address of the data packet obtained after the frame filtering, if the MAC address is the same as that of the data collecting concentrator, the data packet is parsed, in particular, the header of the data packet is checked, a command is extracted, then a header of a packet is added, and it is further transmitted to a system server. If the MAC address is different from that of the data collecting concentrator, i.e., for a data packet which does not belong to this node, route updating is performed to the data packet, and then the data packet is forwarded. The data packet will be discarded if a routing table cannot be found.

The data collecting concentrator according to the embodiment of the invention may be used as a central device in a remote meter reading system, which connects the system server and a meter of an user, and is mounted on a low voltage side of distribution transformer, it collects data of all instruments, performs processing and encapsulating of the collected data, and transmits the encapsulated data to the system server through a universal network. Accordingly, the collection of data in different instruments can be achieved without laying a special line, and the reliability of the data transmission can be guaranteed.

In addition, in an embodiment of the present invention, the data collecting concentrator may further include: a storage module (not shown) for storing the data collected by the data collecting module 101 to facilitate querying the colleted data.

It should be noted that the embodiment of the data collecting concentrator described above are only exemplary, in which the units explained as separate components may be or may not be physically separated, and the components used as the modules may be or may not be physical unit, i.e., they may be located in one place, or may be distributed on multiple network units. The object of the embodiment may be achieved by choosing part or all of the modules as required. The embodiment may be understood and implemented without any creative work, by those skilled in the art.

For example, Fig.2 is a structural schematic diagram of a specific application of the data collecting concentrator according to an embodiment of the present invention.

The data collecting concentrator according to the embodiment integrates wireless and wired data collecting functions, and can process the collected data from both wireless and wired data collecting simultaneously. Moreover, the different modes of data collecting are logically independent of each other, without interdependent and mutual interference.

In this embodiment, the data collecting, processing and reporting functions are integrated into a whole function which is implemented by a high performance enhanced embedded CPU, i.e., a kernel board module 200 shown in Fig. 2. The kernel board module 200 is equipped with a serial port 201, a USB (Universal Serial BUS) interface 202, and an Ethernet interface 203. The serial port 201 may include an RS232 interface and/or an RS485 interface. In addition, the kernel board module 200 may also be equipped with a radio-frequency module 204 and a wireless module 205. The wireless module 205 may be a GSM (Global System of Mobile communication) module, a GPRS (General Packet Radio Service) module or a CDMA (Code Division Multiple Access) module.

It should be noted that individual interfaces and modules described above may be selected simultaneously, or parts of the interfaces may be selected as required.

For example, the kernel board module 200 may collect the data of an instrument through the serial port 201 and the radio-frequency module 204, and can process the data from both the serial port 201 and the radio-frequency module 204 simultaneously which are independent of each other, and seamless integration of a wired data collection and a wireless data collection is achieved. The radio-frequency module 204 may communicate with the instrument through a micro-power radio-frequency, to collect the data of instrument.

For another example, in the communication with a system server, the kernel board module 200 may communicate with the system server through the Ethernet interface 203. In this case, the data collecting concentrator may be used as a DHCP (Dynamic Host Configuration Protocol) client; furthermore, the kernel board module 200 may also communicate with the system server through the wireless module 205. Thereby, compatibility of a wired mode with a wireless mode is achieved.

Accordingly, the data collecting concentrator according to the embodiment of the present invention adopts a high performance enhanced embedded CPU, an embedded operating system and a short-distance radio-frequency technique. The communication with the master station for electric power load management may be performed using a mobile public network GPRS/CDMA or an Ethernet. The data collecting concentrator may directly receive a command from the master station to report actively the parameters of an instrument of a user and some important information and warning information in operation. The data collecting concentrator may support various specifications of instrument data collecting, which are independent of each other and are non-interfering in the processing. With the data collecting concentrator according to the embodiment of the invention, it is not necessary to lay a special line, furthermore, simple implementation, low-cost installation, strong anti-interference ability, high reliability of data collecting and transmission can be obtained. The data collecting concentrator has good flexibility of networking, a wide range of applications and can be applied to meter reading needs not only in electric power but also in various occasions such as water, gas and the like.

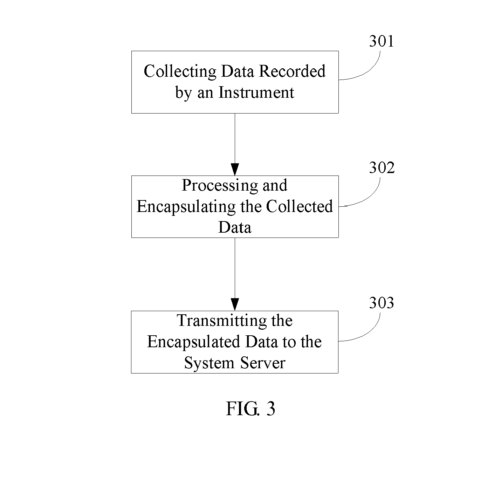

Accordingly, a data collecting method is further provided according to an embodiment of the invention. Fig.3 is a flowchart of this method, the method includes the steps of:

Step 301: collecting data recorded by an instrument.

The instrument may include any one or more of the following: an electricity meter, a gas meter, a water meter.

Specifically, the data recorded by an instrument may be collected through a wired mode, e.g., through an RS232 interface and/or an RS485 interface. The data recorded by an instrument may also be collected through a radio-frequency mode, e.g., through 433 MHz radio-frequency mesh technique, or Zigbee technology (a short-range, low-power wireless communication technology) or 2.4 GHz radio-frequency technique.

Step 302: processing and encapsulating the collected data.

For example, the data collected is encapsulated in the format shown in Table 1 regardless whether it is collected through wired mode or wireless mode:

**Table 1:**

| Start code 1 | Terminal address | Data packet serial number | Start code 2 | Control code | Data length | Data content | Check code | End code |
|---|---|---|---|---|---|---|---|---|
| 1 byte | 4 bytes | 4 bytes | 1 byte | 1 byte | 4 bytes | n bytes | 1 byte | 1 byte |

The meanings of the individual fields are as follows:

Start code 1: start identification 1 of the data packet;

Terminal address: transmission address of the data packet;

Data packet serial number: the number of each data packet;

Start code 2: start identification 2 of the data packet;

Control code: the type of the data packet;

Data length: the length of the content of the present data packet;

Data content: the data to be uploaded;

Check code: performing XOR (exclusive or) operation from the first byte to the last byte of the data content;

End code: end identification of the data packet.

Of course, other encapsulation formats may also be used. The embodiments of the invention are not limited thereto.

Step 303: transmitting the encapsulated data to the system server.

Specifically, the encapsulated data may be transmitted to the system server through an Ethernet interface or a wireless module.

It should be noted that in the embodiments of the invention, the collected data may also be stored locally to facilitate querying the collected data.

The data collecting method according to the embodiments of the invention can be applied to meter reading in various occasions such as electric power, water, gas and the like. With the method according to the invention, the transmission of the collected data can be achieved without laying a special line, furthermore, high reliability of the data collection and transmission can be obtained.

The same or similar parts among the embodiments in the specification can be referenced by each other; emphasis of explanation for each embodiment is its difference from other embodiments, and the description for the corresponding parts may be referenced for the relevant portions.

Disclosed above are only the preferred embodiments of the present invention and the invention is not limited thereto. Any variations which may readily occur to those skilled in the art without any creativity, and several improvements and retouches made without departing from the principle of the present invention should all fall within the scope of protection of the present invention.

## Claims

1. A data collecting concentrator, comprising:
a data collecting module for collecting data recorded by an instrument;
a data processing module for processing and encapsulating the data collected by the data collecting module; and
a reporting module for transmitting the data encapsulated by the data processing module to a system server through a universal network.

2. The data collecting concentrator according to claim 1, wherein the data collecting module comprises an RS232 interface and/or an RS485 interface.

3. The data collecting concentrator according to claim 1 or 2, wherein the data collecting module comprises:
a radio-frequency (RF) module for collecting the data recorded by the instrument through a radio-frequency mode.

4. The data collecting concentrator according to claim 1, wherein
the reporting module is adapted to transmit the data encapsulated by the data processing module to the system server through an Ethernet interface or a wireless module.

5. The data collecting concentrator according to any one of claims 1 to 4, further comprising:
a storage module for storing the data collected by the data collecting module.

6. A data collecting method, comprising:
collecting data recorded by an instrument;
processing and encapsulating the collected data; and
transmitting the encapsulated data to a system server through a universal network.

7. The data collecting method according to claim 6, wherein the collecting data recorded by an instrument comprises:
collecting data recorded by the instrument through an RS232 interface and/or an RS485 interface.

8. The data collecting method according to claim 6 or 7, wherein the collecting data recorded by an instrument further comprises:
collecting data recorded by an instrument through a radio-frequency mode.

9. The data collecting method according to claim 6, wherein the transmitting the encapsulated data to a system server comprises:
transmitting the encapsulated data to a system server through an Ethernet interface or a wireless module.

10. The data collecting method according to any one of claims 6 to 9, further comprising:
storing the collected data.
